# EUROPEAN PATENT APPLICATION

(11) **EP 1 473 885 A1**
(43) Date of publication of application: **03.11.2004**
(21) Application number: 03291059.8
(22) Date of filing: 30.04.2003
(51) Int. Cl.: H04L 12/56, H04L 12/28

(54) **Wireless communication unit and method for power saving with a power aware link adaption function**

(71) Applicant: Motorola, Inc., Schaumburg, Illinois 60196 (US)
(72) Inventor: Simoens, Sebastian, 92330 Sceaux (FR); De Courville, Marc, 75014 Paris (FR); Pellati, Pietro, 75006 Paris (FR); Strinati,Calvanese Emilio, 92160 Antony (FR); Gosteau, Jermy, 75014 Paris (FR)
(74) Representative: Wharmby, Martin Angus

(57) **Abstract**

A wireless communication unit (460) comprises a processor (508) having a power-aware link adaptation function (540) for selecting an operational mode of the wireless communication unit (460) to transmit at least one data packet, the wireless communication unit (460) characterised in that the processor (508) is configured to perform, or is operably coupled to, a communication medium monitoring function that monitors an occupancy of a communication medium that comprises a plurality of communication links and, in response to a determination of the occupancy of the communication medium, the processor (508) performs link adaptation for at least one data packet transmission of the wireless communication unit (460).

In this manner, in the provision of a power-aware link adaptation concept together with a communication medium occupancy monitoring function one or more of several links sharing the same communication medium can be selected to minimise power consumption within the wireless communication unit.

## Description

### Field of the Invention

This invention relates to a mechanism for reducing power consumption in a wireless communication unit, for example, one operating in a wireless local area network. The invention is applicable to, but not limited to, reducing power consumption during active transmissions in such networks.

### Background of the Invention

In the field of wireless communication systems, it is known generally that power may be conserved by switching off components when they are not in use. Power conservation is known to be particularly desirable in battery powered apparatus.

It is also known that wireless local area network (WLAN) technology is likely to be the access technology that will carry most of the communication traffic in the next few years, particularly in key areas such as home and corporate environments. In the field of WLAN, a number of applications are considered as critical to its success, for example, voice over an Internet Protocol (IP)-based (over) WLAN (VoIPoWLAN) and video over WLAN.

For these applications to bring commercial success to WLAN, it is anticipated that the power consumption of these applications will need to be significantly lower than the power consumption currently used in 2^{nd} generation (2G) or 3^{rd} generation (3G) circuit-switched voice technology communication units. In particular, a lower power consumption performance of such devices will enable the introduction of dual WLAN/Cellular handsets without a battery life penalty.

However, the reduction of a wireless communication unit's power consumption is known to be a complex task. The known techniques of reducing power consumption in wireless devices have primarily been tried and tested in the 2G cellular phone arena. The two primary power-hungry functions in a wireless communication device are known to be:
(i) The processor function; and
(ii) The radio frequency power amplifier (PA), when the wireless communication unit is transmitting radio frequency signals.

In classical Power Amplifier (PA) designs, the power efficiency of the PA decreases as the squared root of the output power. Therefore, the reduction of PA consumption is slower than the reduction of transmit power. An external PA is typically located at the output of a radio frequency (RF) integrated circuit (IC) that performs a majority of the radio frequency signal manipulation functions (i.e. pre-amplification, radio frequency conversion, filtering, etc.). The RF IC is typically coupled to a signal processing IC that performs the signal processing functions of the wireless communication unit.

In the context of reducing power consumption when transmitting radio frequency signals, it is possible to reduce power consumption by transmitting at a power level lower than the maximum provided by the device or, if the device complies with a standard, allowed by the standard.

Clearly, transmission at a reduced RF power level permits a consequent reduction in the consumption of the Power Amplifier (PA), which (as mentioned above) represents a significant part of the total transceiver power consumption.

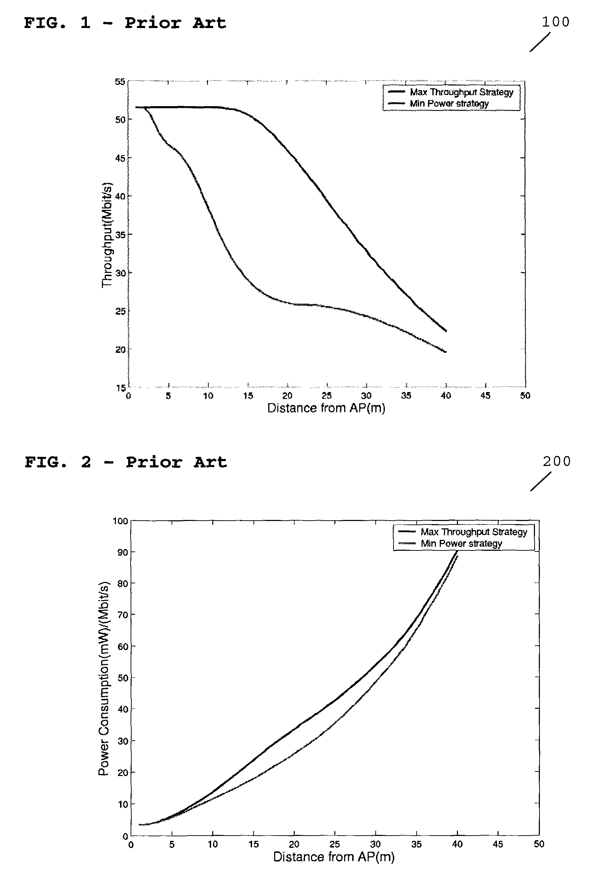

Referring now to FIG. 1, a graph 100 illustrates the relationship between data throughput vs. distance from a wireless communication unit to its access node. Similarly, FIG. 2 illustrates a graph 200 of power consumption vs. distance from a wireless communication unit to its access node.

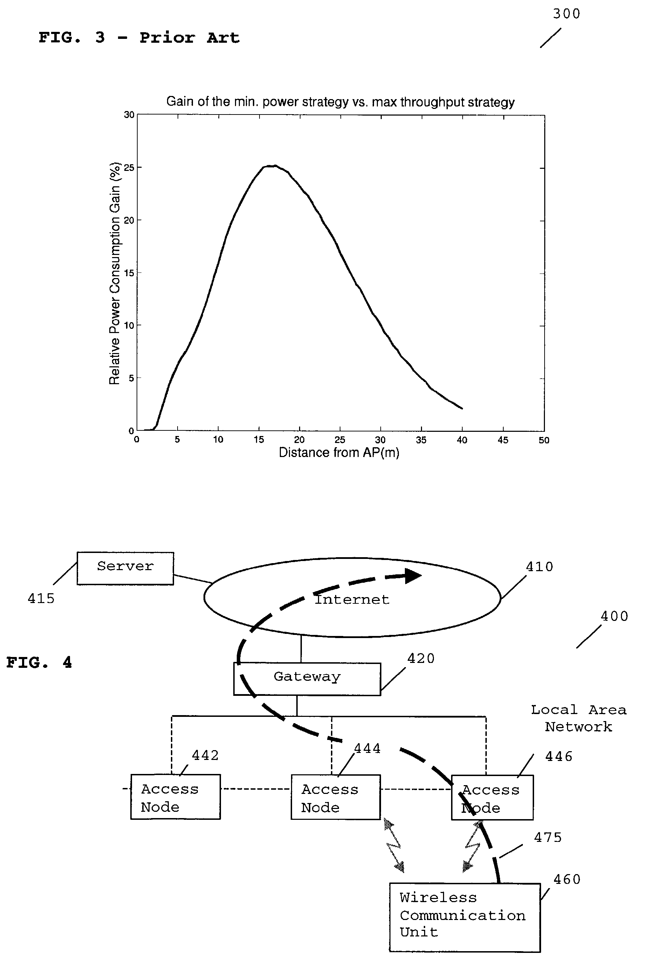

When taking these graphs together, it is possible to identify the benefit of a minimum power strategy vs. a maximum throughput strategy in terms of the distance from a wireless communication unit to its access node, as illustrated in the graph 300 of FIG. 3. In this case, the total IC power consumption can be reduced by up to 25% on average, when the wireless communication unit is able to transmit at minimum output power. At distances very close to the access node, i.e. the node between the wireless communication unit and the wireline communication network, the wireless communication unit already transmits at a minimum acceptable power level when it employs power control. Hence, the wireless communication unit is unable to benefit from any further power consumption improvement.

At large distances between the transmitting wireless communication unit and its access node, the transmitting wireless communication unit has to transmit at full power to access the wireline communication network. Between those extreme cases, it is possible for the transmitting wireless communication unit to trade-off throughput for power consumption. This means that the transmitting wireless communication unit is able to occupy the communication channel for a longer time to transmit a data packet, whilst reducing the total energy consumed for that data packet transmission.

An alternative method of reducing transmit power consists of keeping the wireless communication unit in an 'idle' mode of operation when there is no traffic to transmit, and to aggregate the data when the traffic is intermittent/bursty in nature. This provides a reduction in the number of transmission attempts, albeit at the expense of increased delay. Such a technique is described in US Patents: US 6,285,892 and US 6,192,230. It is also known that IEEE802.11 Distributed Coordination Function (DCF), Pointed Coordination Function (PCF) and Hybrid Coordination Function (HCF) and HIPERLAN/2 standards implement such mechanisms. However, this mechanism does not reduce the power consumption in active transmission mode. Therefore, in many applications, such as large file transfer or VoIP without silence suppression, where the traffic is not bursty, the wireless communication unit is unable to enter an idle mode and the above 'intermittent transmission' method does not provide any power saving.

A known further alternative method is to employ transmit power control, as described in the document titled: "Performance of optimum transmitter power control in cellular radio systems", authored by Zander, J. and published in the IEEE Transactions on Vehicular Technology, Volume: 41 Issue: 1, Feb. 1992, Page(s): 57-62. In current systems, various bit rates can be achieved by selecting a mode from a set of operational modes. An operational mode corresponds to a different bit rate and typically consists of the association of a constellation and a coding rate. Each operational mode also requires a different Signal to Noise Ratio (a.k.a. a target SNR) to meet the Quality of Service (QoS) requirements. Power control consists of transmitting at the minimum possible power in order to maintain the target SNR.

A very recent evolution of this technique is described in the paper titled: "Energy-Efficient PCF operation of IEEE802.11a Wireless LAN", authored by Daji Qiao et al. and published in the Proceedings of INFOCOM 2002 [1]. Here, the authors propose to select an operational mode that minimizes the energy consumed to transmit a data packet, including taking into account any re-transmissions.

However, in [1], the authors assume that transmitting at a lower rate systematically increases power consumption, as it inevitably increases transmission time. Consequently, the authors perform only a preliminary investigation into how re-transmissions affect the power efficiency of the various bit rates.

Furthermore, the authors fail to investigate in any detail how such a strategy could be implemented in practical wireless networks. In addition, the authors consider power saving only on an isolated link, which is typically an invalid assumption in wireless communication systems where the communication resource generally includes many communication links, whose use is often shared.

Notably, the authors *explicitly state* that their technique cannot be applied to distributed MAC protocols such as the Distributed Coordination Function (DCF) mode of IEEE802.11, which is the dominant mode in current WLAN products.

Thus, there exists a need in the field of the present invention to provide an improved power consumption mechanism for wireless devices wherein the abovementioned disadvantages may be alleviated.

### Statement of Invention

In accordance with the present invention, there is provided a wireless communication unit, an access node, a wireless centralised access network, a wireless random access network and a method of reducing power consumption in a wireless communication unit, as defined in the appended Claims.

### Brief Description of the Drawings

FIG. 1 illustrates a graph of data throughput vs. distance from a wireless communication unit to its access node;
FIG. 2 illustrates a graph of power consumption vs. distance from a wireless communication unit to its access node; and
FIG. 3 illustrates a graph of the gain of the minimum power strategy vs. the maximum throughput strategy in relation to the distance from a wireless communication unit to its access node.

Exemplary embodiments of the present invention will now be described, with reference to the accompanying drawings, in which:
FIG. 4 illustrates a simplified block diagram of a wireless access communication network capable of supporting the inventive concepts of the present invention;
FIG. 5 illustrates a simplified block diagram of a wireless communication unit adapted in accordance with the preferred embodiment of the present invention;
FIG. 6 is a diagram illustrating the concept of power aware link adaptation in random access networks, in accordance with a preferred embodiment of the invention;
FIG. 7 is a diagram illustrating the concept of power-aware link adaptation in centralized access networks, in accordance with a preferred embodiment of the invention;
FIG. 8 illustrates a graph of data throughput vs. distance from a wireless communication unit to its access node, when implementing a preferred embodiment of the invention;
FIG. 9 illustrates a graph of power consumption vs. distance from a wireless communication unit to its access node, when implementing a preferred embodiment of the invention;
FIG. 10 illustrates a graph of the gain of the minimum power strategy vs. the maximum throughput strategy in relation to the distance from a wireless communication unit to its access node, when implementing a preferred embodiment of the invention; and
FIG. 11 illustrates a flowchart of a power saving process of a wireless communication unit, when implementing a preferred embodiment of the invention.

### Description of Preferred Embodiments

In summary, the inventive concepts of the present invention propose a power-saving mechanism based on power-aware link adaptation, which provides an enhancement over the technique described in [1]. Advantageously, the power-aware link adaptation concepts of the present invention can be applied to several links sharing the same communication medium. The preferred embodiment of the present invention additionally proposes a power-saving mechanism that exploits the flexibility of both power-aware link-adaptation and a power saving technique such as transmit power control. In this regard, power-aware link adaptation enables the wireless communication unit to switch from one operational mode to another, and transmit power control is the manner in which a wireless communication unit optimises its radio frequency (RF) transmit output power.

The classical approach to link adaptation selects an operational mode that maximizes the system throughput based on a status of the current (single) communication link (which can be characterized for instance by SNR) and any QoS requirements. Selecting an operational mode that maximises the data throughput means that a transmission of a data packet will reach its destination much faster.

However, the inventors of the present invention have noted that the total energy required to transmit the data packet is not necessarily minimised due to the shorter transmission time period. For instance in IEEE 802.11a system, for the same coding rate, transmitting data in a 64-QAM (quadrature amplitude modulated) signal can reduce the packet duration by a factor of 1.5 compared to 16-QAM, whereas the transmitted power in the same scenario is increased by a factor of '10'. Thus, the inventors of the present invention have recognised that the total energy consumed by the wireless communication unit in transmitting a data packet using a high bit rate operational mode can be larger than the energy consumed with transmitting the same data packet using a lower bit rate mode.

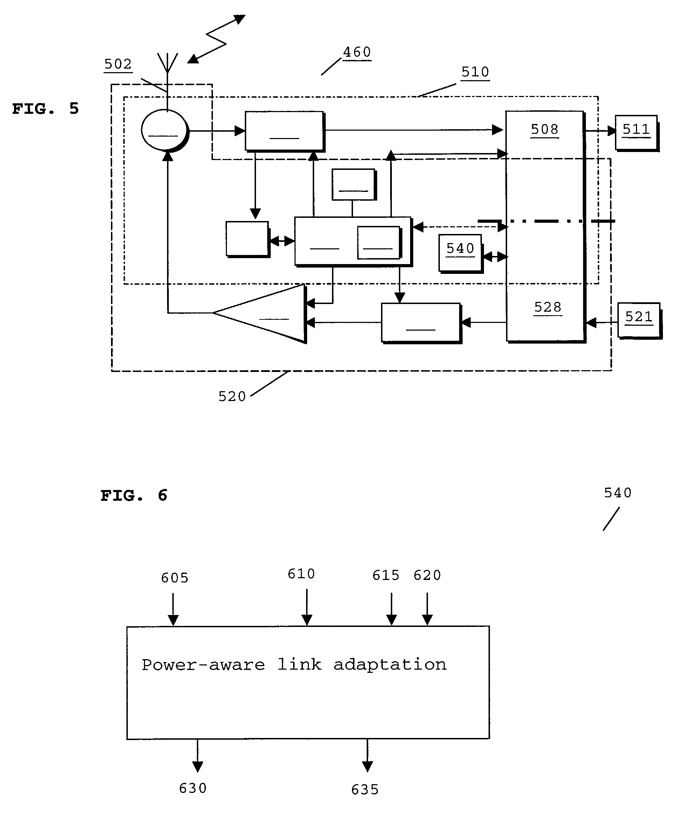

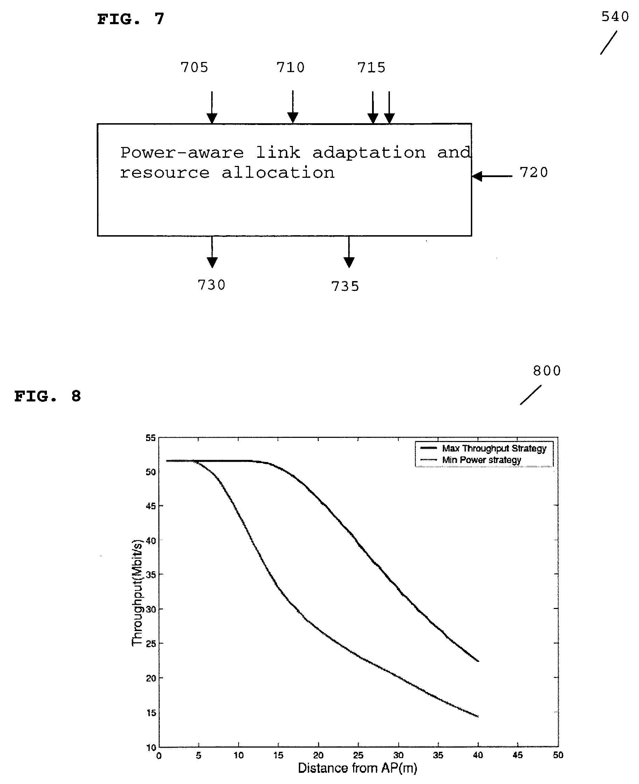

Based on this observation, it is envisaged that a wireless communication unit should be provided with the ability to select the best operational mode, in terms of power consumption (battery life), for each new data packet to be transmitted. In particular, the preferred embodiment of the present invention proposes to couple this selection of an optimal operational mode to a process of monitoring occupancy of a plurality of communication resources/media/links. This strategy is hereinafter termed power-aware link adaptation and is illustrated in greater detail in FIG. 6 and FIG. 7.

This approach is particularly advantageous in wireless communication systems where the communication resource generally includes many communication links that are shared, between many users. A preferred application of the present invention is with respect to distributed medium access control (MAC) layer protocols, such as the Distributed Coordination Function (DCF) mode of IEEE802.11. Thus, when applied with such protocols, the inventive concepts can be applied in current and future wireless local area network (WLAN) products.

Consequently, the inventive concepts of the present invention offer advantages over the known selection of a best operational mode based on an individual communication resource, which is ineffective in a wireless communication scenario. If the bit rate of this operational mode is lower than the maximum achievable bit rate, given the link quality, then selecting the energy-saving mode will increase the total transmission duration of the packet. Therefore, if a user occupies the channel for a longer time in order to transmit a given data packet, then the time available for other users to transmit will be consequently reduced. This may well lead to a reduction in data throughput within the communication cell.

Hence, in an enhanced embodiment of the present invention, the inventors propose to employ the aforementioned power-aware link adaptation process that reduces the energy consumption of the device whilst simultaneously maximizing cell throughput. An improvement in system performance is achieved by taking a medium occupancy criterion into consideration in the power-aware link adaptation decision.

Referring now to FIG. 4, a local area (data communication) network (LAN) 400 is illustrated. A computer/ communication domain includes a gateway 420 between nodes in the LAN 400 and, say, the Internet 410. In this regard, let us assume the mobile wireless communication unit 460 is a portable computer that is able to communicate with the Internet 410 by wirelessly coupling to any of a number of access nodes 442, 444, 446.

When the mobile wireless communication unit 460 has logged on to an access node, say access node 446, it is able to access applications from the Internet or any other connected server 415. This communication link is set up via a route 475 that encompasses the Internet 410, the gateway 420, and any number of serially-coupled intermediate routers 430 (not shown for clarity purposes only) and the access node 446.

The inventive concepts of the present invention are further described below with respect to the LAN being either a random access network or a centralised access network. Notably, the wireless communication unit has been adapted to monitor communication resource/medium occupancy within the LAN and apply this information to a power-aware link adaptation decision, as described below.

In addition, the access node 446 comprises a processor able to determine a power consumption metric relating to substantially each operational mode of a number of wireless communication unit(s) 460. The power consumption metric(s) are used by a number of wireless communication unit(s) 460 in uplink communications to the access node 446. In this manner, the access node 446 allocates a communication medium and proposes an operational mode to the wireless communication unit(s) 460 to reduce power consumption therein. In an enhanced embodiment of the present invention, the access node processor is further adapted to allocate a higher priority power-aware link adaptation and scheduling mechanism to those wireless communication units that are able to save power.

Referring now to FIG. 5, there is shown a block diagram of a wireless communication unit 460 capable of operating on a wireless local area network (WLAN), which is adapted to support the inventive concepts of the preferred embodiments of the present invention. As known in the art, and replicated here for completeness, the wireless communication unit 460 comprises, for example, standard radio frequency components and circuits, such as an antenna 502 preferably coupled to an antenna switch 504. The antenna switch 504 provides isolation between a receiver and a transmitter chain within the wireless communication unit 460. The receiver chain typically includes receiver front-end circuitry 506 (effectively providing reception, filtering and intermediate or baseband frequency conversion). The front-end circuitry 506 is serially coupled to a signal processing function 508. An output from the signal processing function is provided to a suitable output device 511, such as a liquid crystal display screen. The signal processing function 508 performs all signal processing functions for the wireless communication unit 460, including, for example, demodulation, de-mapping, bit de-interleaving, channel estimation and decoding, dependent upon the communication technology used as known in the art.

In accordance with the preferred embodiments of the present invention, the operation of the signal processing function 508 has been adapted to support the inventive concepts herein described. In particular, the signal processing function 508 is operably coupled to (or contains the functionality of) a power-aware link adaptation function 540 as described below with reference to FIG. 6 and FIG. 7.

For completeness, the receiver chain also includes received signal strength indicator (RSSI) circuitry 512 coupled to the receiver front-end circuitry 506 and the signal processing function 508 (generally realised by a digital signal processor (DSP)). A controller 514, also coupled to the receiver front-end circuitry 506 and the signal processing function 508, may therefore receive bit error rate (BER) or frame error rate (FER) data from recovered information. The controller 514 is coupled to the memory device 516 for storing operating regimes, such as decoding/encoding functions and the like. A timer 518 is typically coupled to the controller 514 to control the timing of operations (transmission or reception of time-dependent signals) within the wireless communication unit 460. In the context of the present invention, the timer 518 dictates the timing of speech signals, in the transmit (encoding) path and/or the receive (decoding) path.

As regards the transmit chain, as also known in the art, this essentially includes an input device, such as a keyboard 521 coupled in series via transmit signal processor 528 to a transmitter/ modulation circuit 522. Thereafter, any transmit signal is passed through a power amplifier 524 to be radiated from the antenna 502. The transmitter/ modulation circuitry 522 and the power amplifier 524 are operationally responsive to the controller, with an output from the power amplifier coupled to the duplex filter or circulator 504. The transmitter/ modulation circuitry 522 and receiver front-end circuitry 506 comprise frequency up-conversion and frequency down-conversion functions (not shown).

In particular, an enhanced embodiment of the present invention is described with reference to a wireless communication unit adapted to implement power-aware link adaptation based on communication medium occupancy, together with information on one or more of the following parameters:
(i) The performance characteristics of the wireless communication unit itself, for example its power characteristics such as user power profile, battery status, etc.
(ii) A communication link performance between the wireless communication unit and another communication device, for example based on a signal-to-noise ratio (SNR) value, and/or
(iii) System parameters, for example quality of service (QoS) constraints.

The various adapted components within the wireless communication unit 460 can be realised in discrete or integrated component form. More generally, the functionality associated with deciding whether to decode or not may be implemented in a respective communication unit in any suitable manner, in hardware, software or firmware. For example, new apparatus may be added to a conventional wireless communication unit, or alternatively existing parts of a conventional wireless communication unit may be adapted, for example by reprogramming one or more processors therein. As such, the required adaptation, for example the provision of software code to implement the power-aware link adaptation function, in the preferred embodiment of the present invention, may be implemented in the form of processor-implementable instructions stored on a storage medium, such as a floppy disk, hard disk, PROM, RAM or any combination of these or other storage multimedia.

It is envisaged that a wireless communication unit may benefit from the inventive concepts hereinbefore described in at least two scenarios. First, the inventive concepts may be applied to a wireless communication unit operating in a random access network, as illustrated in the simplified information flow diagram of FIG. 6. Secondly, it is envisaged that a wireless communication unit may benefit from the inventive concepts hereinafter described when operating in a centralised access network, as illustrated in the simplified information flow diagram of FIG. 7.

Referring now to an implementation in a random access network illustrated in FIG. 6, the power-aware link adaptation function 540 monitors the occupancy of the communication medium 605. In this regard, the power-aware link adaptation function 540 identifies whether the occupancy of the communication medium is below a certain level. If so, it selects the most efficient operational/transmission mode 635 in terms of energy consumption.

In addition, a battery status indication 610 can be taken into consideration by the power-aware link adaptation mechanism 540. If the communication unit's battery level is low, then the communication unit may decide to use a power-saving mode that employs a higher occupancy of the communication medium, when compared to an operational mode where the battery level is high.

It is also within the contemplation of the invention that any (of many) known metrics can be used to identify or characterise the medium occupancy, for instance:
(i) The number of collisions having occurred in previous frames; and/or
(ii) The mean contention window over previous frames (if a contention mechanism is used in the random access technique); and/or
(iii) A proportion of time during which the channel was occupied during previous frames.

If the cell is lightly loaded, it is envisaged that the communication unit is configured such that it is able to decide to switch its transmission 630 to a lower mode, i.e. a lower data rate, so long as its QoS requirements 620 are satisfied. Therefore, in this mode, the wireless communication unit will configure itself to occupy the communication channel for a longer time. Advantageously, the wireless communication unit will save on power consumption and yet the cell will not suffer from any throughput deterioration.

In addition, the power-aware link adaptation process 540 in a random access network preferably utilises traditional parameters such as link state 615 and QoS 620, as well as the aforementioned new parameters of communication medium occupancy and battery status.

In a random access network employing priority functions (such as IEEE 802.11e with Enhanced DCF), where access to the communication channel is faster for connections of higher priority, it is envisaged that the aforementioned power-saving mechanism can be supplemented by the QoS criteria. This approach is readily supported in the IEEE standard by use of a lower value of the contention window.

Thus, and advantageously in accordance with the preferred embodiment of the present invention, it is proposed that a higher priority is allocated to wireless communication units that are able to save energy. For example, when a first communication unit receives a data packet from a second communication unit, it is able to determine a quality of the communication medium used, for example by calculating a received SNR.

Therefore, the first communication unit will be able to determine whether it is able to save power by selecting a lower operational mode. If it is able to select a lower rate operational mode, it will request a high priority connection with the second communication unit. Once this connection is established, the first communication unit will send data with a low rate thanks to a prioritised access to the medium. Advantageously, it is envisaged that this mechanism is invoked when a wireless communication unit is identified as absolutely needing to transmit data on a channel and is also identified as having a low battery level.

When the inventive concepts are applied in an IEEE802.11a or IEEE802.11g context, it is proposed that a further enhancement of the inventive concepts is employed to resolve the hidden node problem mentioned by Qiao in [1]. This further enhancement of the present invention proposes the transmission of Request To Send/Clear To Send (RTS/CTS) data packets. These RTS/CTS data packets are preferably sent at full power before sending subsequent data using a power-aware link adaptation process. For instance, if such an RTS/CTS frame exchange is performed before sending a 1460-byte long Ethernet packet with the fastest mode (at 54 Mbps), the overhead due to the RTS/CTS is 30% of the transmission time. Therefore, during at least 70% of the time, power saving will be possible. The above parameters are readily calculable from the IEEE standard.

Referring now to FIG. 7, the power-aware link adaptation mechanism 540 is applied to a centralized access network. Here, the network's access node has both the knowledge of and control of the communication medium occupancy. Therefore, in accordance with a preferred embodiment of the present invention, the access node is made responsible for scheduling the starting time, duration and bit rate of substantially every transmission. In this manner, optimum energy saving is achieved and QoS requirements are met for each wireless communication unit. The preferred embodiment of the present invention assumes that the access node has enough information on the power consumption and link state of each of the wireless communication units to make such a decision.

The preferred embodiments of the power-aware link adaptation in a centralized network are:
(i) A fair power saving scheduling of the transmissions. In this context, the access node is configured to grant capacity to the wireless communication units and, if possible, optimise the operational modes of the wireless communication units in terms of power consumption. This is preferably achieved by increasing the load of a frame to be transmitted until it is maximized, under the constraint that each wireless communication unit saves an equivalent amount of power.
(ii) A prioritised power saving scheduling. The access node allocates any remaining capacity to be used for power consumption reduction processes for wireless communication units that are able to save the most power, or those wireless communication units with the most stringent battery limitations.

The enhanced embodiment of the present invention, namely the application of power control to that of power-aware link adaptation in a centralized network, is depicted on FIG. 7. In a similar manner to the aforementioned (pure) power aware link adaptation mechanism described with reference to FIG. 6, this joint process of power-aware link adaptation and scheduling at the access node preferably takes, as inputs, the resource requests of the wireless communication units 705, their battery status 710, link quality and QoS requirements 715. The access node also makes decisions on the bit rates 735 and resource allocation 730, by, for example, applying one of the policies 720 mentioned previously.

The inventors have validated, via simulation, the benefits to be gained from the inventive concepts hereinbefore described. The simulations were used to evaluate the maximum gain achievable during active transmission, thus obtaining results independent of the selected MAC protocol. The Physical layer of the simulation was selected as orthogonal frequency division multiple access (OFDM), with data rates of 6 Mbit/s up to 54 Mbit/s. The QoS requirement was set to a data packet error rate of less than 1%, which is a realistic target in a VoIPoWLAN system. A data packet size was set to '128' bytes, and the environment was selected as a "typical indoor office, non-line-of-sight" environment with 50 nsec r.m.s. delay spread, and a path loss exponent of '3.6'. The shadowing standard deviation was selected as 5 dB. The range of the cell was defined as the area where statistically less than 2.5% of connections were unable to meet the QoS criterion.

Referring now to FIG. 8, a graph 800 illustrates the corresponding simulation results of data throughput vs. distance from a wireless communication unit to its access node, when implementing a preferred embodiment of the invention. As clearly shown, when compared to the comparable prior art graph 100 of FIG. 1, the minimum power strategy in terms of throughput versus distance from the access node of the wireless communication unit is improved.

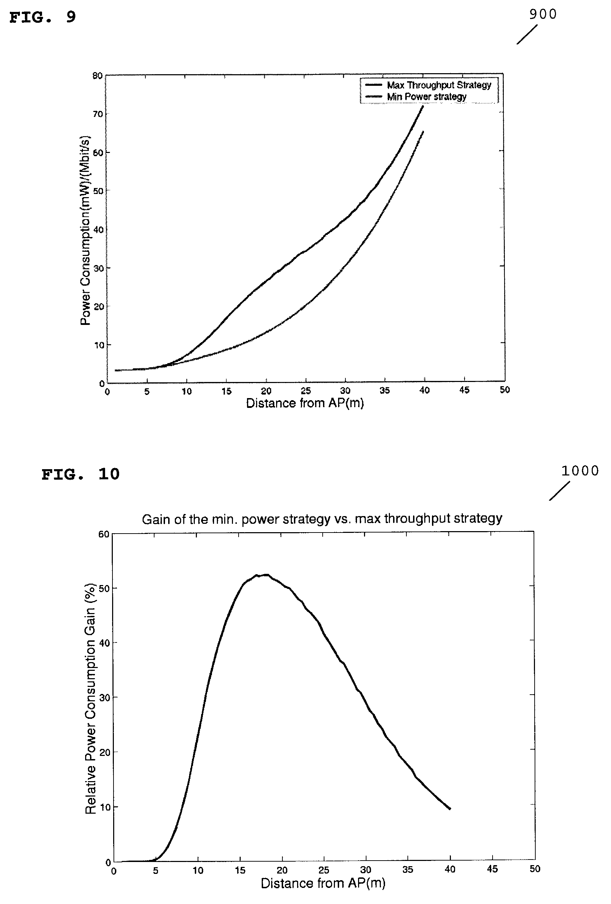

Similarly, referring now to FIG. 9, a graph 900 illustrates the corresponding simulation results of power consumption vs. distance from a wireless communication unit to its access node, when implementing a preferred embodiment of the invention. As clearly shown, when compared to the comparable prior art graph 200 of FIG. 2, the power consumption in terms of minimum power strategy and maximum throughput strategy with regard to distance from wireless communication unit to the access node is improved.

Similarly, referring now to FIG. 10 a graph 1000 illustrates the corresponding simulation results of the gain of the minimum power strategy vs. the maximum throughput strategy in relation to the distance from a wireless communication unit to its access node, when implementing a preferred embodiment of the invention. As clearly shown, when compared to the comparable prior art graph 300 of FIG. 3, the relative power consumption benefit is effectively doubled with regard to distance from wireless communication unit to the access node. This equates, in this case, to an increase in a wireless communication unit's battery life of up to 50% on average. This is an extremely desirable improvement that could be provided to/by new PA architectures.

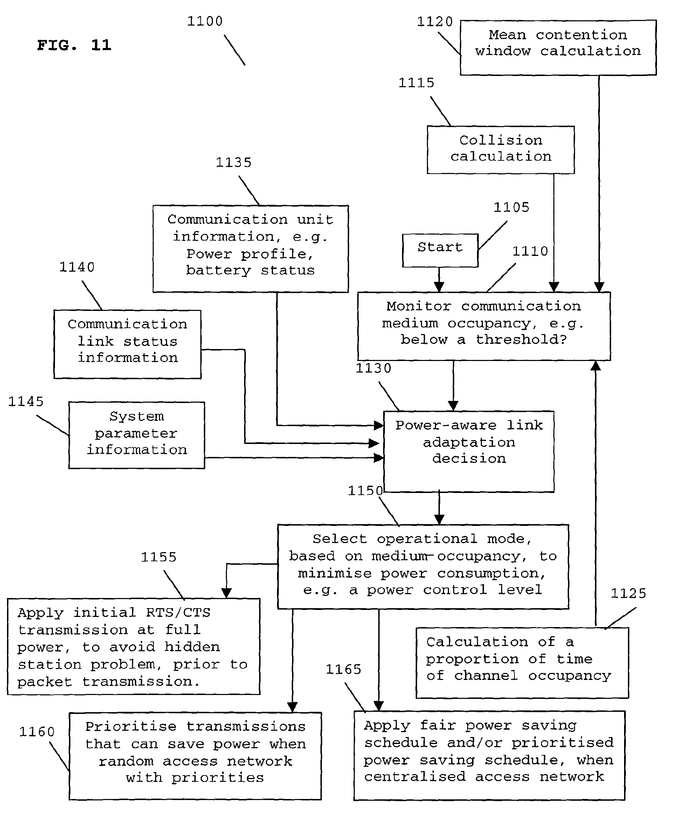

In summary, the improved power-aware link adaptation mechanism according to the preferred embodiments of the present invention is illustrated in the flowchart 1100 of FIG. 11. The process starts in step 1105, and a wireless communication unit monitors occupancy of a communication medium, as shown in step 1110. This may entail determining whether the level of occupancy exceeds or falls below a threshold value. This step may also entail receiving data in the form of a number of previous collisions, in step 1115, and/or a mean contention window calculation, as shown in step 1120, and/or a calculation of a proportion of time of channel occupancy, as in step 1125.

With knowledge of the channel occupancy, the wireless communication unit (or say, an access node in other embodiments) makes a power-aware link adaptation decision, based on a desire to minimise power consumption, whilst maintaining a QoS level, as shown in step 1130. This decision preferably receives input from the wireless communication unit itself, in the form of power profile information, battery status information, etc., as shown in step 1135. It may also receive communication link status information, as in step 1140 and/or system parameter information as in step 1145.

The power-aware link adaptation decision preferably selects an operational mode for the wireless communication unit based on the communication medium occupancy, to minimise the wireless communication unit's power consumption. This operational mode may entail operating at a particular power control level, as shown in step 1150.

As mentioned above, if the communication network is a random access network, the network preferably applies an initial RTS/CTS transmission policy before transmitting subsequent data packets, as shown in step 1155. The random access network also preferably prioritises transmissions that are able to save power, as in step 1160. In contrast, if the communication network is a centralised access network, an access node may apply a fair power saving schedule process and/or a prioritised power saving schedule, as shown in step 1165.

Thus, in summary, the inventive concepts herein described propose a power-aware link adaptation mechanism suitable for a number of wireless communication networks. The power-aware link adaptation mechanism utilizes a monitoring operation of preferably a multitude of communication resources/media to facilitate a wireless communication unit selecting the best communication medium/resource for transmitting a data packet, in order to minimize power consumption.

It is within the contemplation of the invention that the present invention is not limited to the use of power control to differentiate between operational modes that provide different levels of power consumption, and that any other known techniques in saving power consumption can be applied with the inventive concepts herein described. Furthermore, it is envisaged that the present invention can be applied in any wireless communication scenario where a number of communication resources are shared between a number of users.

It will be understood that the wireless communication unit, access node and wireless communication networks, for example a wireless centralised access network and a wireless random access network, as described above, provide at least the following advantages:
(i) The power-aware link adaptation concepts of the present invention can be applied to several links sharing the same communication medium. Hence, the inventive concepts enable power-aware link adaptation to be applied to wireless communication networks; and
(ii) When coupled with a power control function, the power-aware link adaptation concepts of the present invention support a power consumption reduction strategy that is particularly desirable to battery-powered wireless communication units.

Whilst specific, and preferred, implementations of the present invention are described above, it is clear that one skilled in the art could readily apply variations and modifications of such inventive concepts.

Thus, a wireless communication unit, an access node and wireless communication networks, for example a wireless centralised access network and a wireless random access network, have been provided wherein the aforementioned limitations associated with the prior art arrangements have been substantially alleviated.

## Claims

1. A wireless communication unit (460) comprises a processor (508) having a power-aware link adaptation function (540) for selecting an operational mode of the wireless communication unit (460) to transmit at least one data packet,
the wireless communication unit (460) **characterised in that** the processor (508) is configured to perform, or is operably coupled to, a communication medium monitoring function that monitors an occupancy of a communication medium that comprises a plurality of communication links and, in response to a determination of the occupancy of the communication medium, the processor (540) performs link adaptation for at least one data packet transmission of the wireless communication unit (460).

2. The wireless communication unit (460) according to Claim 1, wherein the processor (508) performs link adaptation by selecting an operational mode of the wireless communication unit (460).

3. The wireless communication unit (460) according to Claim 2, wherein the processor (508) selects an operational mode by adjusting a power control level of a data packet transmission of the wireless communication unit (460).

4. The wireless communication unit (460) according to any preceding Claim, wherein the processor (508) monitors the occupancy of the communication medium by determining one or more of the following:
(i) A number of previous collisions, for example a number of collisions occurring in a previous frame;
(ii) A mean contention window over one or more previous frames;
(iii) A proportion of time during which the communication medium was occupied during one or more previous frames.

5. The wireless communication unit (460) according to any preceding Claim, wherein the wireless communication unit (460) operates on a time division multiple access communication system supporting bursty traffic.

6. The wireless communication unit (460) according to any preceding Claim, wherein the wireless communication unit (460) operates using a distributed medium access control (MAC) protocol or on a wireless local area network (WLAN) or any derivative thereof such as voice over IP over WLAN.

7. The wireless communication unit (460) according to any preceding Claim, wherein the wireless communication unit (460) operates on a random access network, such as IEEE802.11a.

8. The wireless communication unit (460) according to Claim 7, wherein the wherein the processor further monitors, or obtains, one or more of the following parameters for determining how to perform link adaptation:
(i) Wireless communication unit (460) parameters, for example power characteristics, power profile, battery status;
(ii) Communication link performance to another communication device, for example a signal-to-noise ratio value, and/or
(iii) System parameters, for example a quality of service (QoS) limitation.

9. The wireless communication unit (460) according to Claim 7 or Claim 8, wherein the processor performs power-aware link adaptation using a request-to-send/clear to send (RTS/CTS) frame exchange.

10. The wireless communication unit (460) according to Claim 9, wherein the processor initiates a full power transmission of at least one RTS/CTS frame exchange before transmitting subsequent data using power-aware link adaptation.

11. The wireless communication unit (460) according to any of preceding Claim 7 to 10, wherein the random access network comprises a priority mechanism, such as IEEE802.11 enhanced distributed coordination function (EDCF).

12. The wireless communication unit (460) according to Claim 11, wherein the processor monitors, or obtains a quality of service (QoS) indication and implements the power-aware link adaptation in response to the QoS indication.

13. The wireless communication unit (460) according to Claim 11 or Claim 12, wherein the processor allocates a higher priority to transmission of the wireless communication unit (460) when the wireless communication unit (460) is able to save power by performing power-aware link adaptation.

14. The wireless communication unit (460) according to any of preceding Claims 1 to 6, wherein the wireless communication unit (460) operates on a centralised access network, such as HIPERLAN/2, IEEE802.11h, IEEE802.11 PCF or IEEE802.11e HCF standard.

15. The wireless communication unit (460) according to Claim 14, wherein the processor measures or estimates a communication link's quality and performs its own link adaptation based thereon.

16. The wireless communication unit (460) according to Claim 14 or Claim 15, wherein the processor initiates transmission of a power profile of the wireless communication unit (460) to an access node (446) in the centralised access network, such that the access node (446) is able to determine for substantially each power profile, a power consumption relating to substantially each operational mode.

17. An access node (446), for example an access node adapted to communicate with the wireless communication unit of any preceding Claim, **characterised in that** the access node comprises a processor able to determine a power consumption metric relating to substantially each operational mode of a number of wireless communication unit(s) (460) to use in an uplink communication to the access node (446), such that the access node (446) allocates resources on the communication medium and proposes an operational mode to the wireless communication unit(s) (460) to reduce power consumption therein.

18. The access node (446) according to Claim 17, wherein the access node processor allocates communication resource and/or allocates operational modes to a number of wireless communication unit(s) in terms of power consumption, such that substantially each of the number of wireless communication unit(s) saves a similar amount of power.

19. The access node (446) according to Claim 17 or Claim 18, wherein the access node processor allocates a higher priority power-aware link adaptation and scheduling mechanism to those wireless communication units that are able to save power.

20. A wireless centralised access network adapted to facilitate communications to/from the wireless communication unit (460) according to any of preceding Claims 14 to 16, and/or adapted to facilitate communications to/from the access node (446) according to any of preceding Claims 17 to 19.

21. The wireless centralised access network according to Claim 20, wherein the centralised access network supports communications in accordance with a HIPERLAN/2, IEEE802.11h, PCF or HCF standard.

22. A wireless random access network, such as IEEE802.11a, adapted to facilitate communications to/from the wireless communication unit according to any of preceding Claims 7 to 13.

23. The wireless random access network according to Claim 22, wherein the wireless random access network supports power-aware link adaptation using a request-to-send/clear to send (RTS/CTS) frame exchange, for example supporting a full power transmission of at least one RTS/CTS frame exchange from a wireless communication unit (460) before the wireless communication unit (460) transmits subsequent data using a power-aware link adaptation mechanism.

24. The wireless random access network according to Claim 22 or Claim 23, wherein the wireless random access network supports random access communications with priorities, for example in accordance with an IEEE802.11 EDCF standard.

25. A method of saving power consumption (1100) in a wireless communication unit (460) the method **characterised by** the steps of:
monitoring occupancy (1110) of a communication medium comprising a plurality of communication links; and
determining (1130), in response to the occupancy of the communication medium, a power-aware link adaptation process, for example selecting an operational mode of the wireless communication unit (460) to transmit at least one data packet in a power saving mode.
